# EUROPÄISCHE PATENTSCHRIFT

(11) **EP 4 162 248 B1**
(45) Veröffentlichungstag und Bekanntmachung des Hinweises auf die Patenterteilung: **06.08.2025**
(21) Anmeldenummer: 21729406.5
(22) Anmeldetag: 18.05.2021
(51) Int. Cl.: G01M 13/025, G01M 13/021, G01M 13/027

(54) **ANTRIEB UND VERFAHREN ZUM BETREIBEN EINES ANTRIEBS**
DRIVE AND METHOD FOR OPERATING A DRIVE
ENTRAÎNEMENT ET PROCÉDÉ DE FONCTIONNEMENT D'UN ENTRAÎNEMENT

(30) Priorität: 04.06.2020 DE 102020003371
(43) Veröffentlichungstag der Anmeldung: 12.04.2023
(73) Patentinhaber: SEW-EURODRIVE GmbH & Co. KG, 76646 Bruchsal (DE)
(72) Erfinder: BANASIK, Lech, East Brighton 3187 (AU)
(86) Internationale Anmeldenummer: PCT/EP2021/025183
(87) Internationale Veröffentlichungsnummer: WO 2021/244772

(56) Entgegenhaltungen:
- DE-A1- 102010 017 456
- US-A1- 2011 023 629

## Beschreibung

Die Erfindung betrifft einen **Prüfstand** und ein Verfahren zum Betreiben eines Prüfstandes.

Es ist allgemein bekannt, dass ein Getriebe von einem Elektromotor antreibbar ist.

Aus der DE 10 2010 017 456 A1 ist als nächstliegender Stand der Technik eine

Belastungsvorrichtung bekannt.

Aus der US 2005 / 0 063 245 A1 ist eine Antriebsvorrichtung für einen Extruder bekannt.

Aus der DE 10 03 541 U ist ein Rührgerät bekannt.

Aus der US 2 623 384 A ist eine Testanordnung für Lager und Schmierung bekannt.

Aus der CN 107 687 946 A ist ein Gerät zum Testen eines Getriebes bezüglich Schmiermittelverlust bekannt.

### Aus der US 2011/023629 A1 ist ein Windturbinen-Prüfstand bekannt.

Der Erfindung liegt daher die Aufgabe zugrunde, die Sicherheit bei einem Antrieb zu erhöhen.

Erfindungsgemäß wird die Aufgabe bei dem **Prüfstand** nach den in Anspruch 1 angegebenen Merkmalen gelöst.

Wichtige Merkmale der Erfindung weist der Antrieb einen Elektromotor und ein erstes Getriebe auf, das von dem Elektromotor antreibbar ist, wobei eine abtreibende Welle des ersten Getriebes mittels einer Kupplung, insbesondere starren Wellenkupplung, mit einer ersten Welle drehfest verbunden ist, wobei die erste Welle mittels eines, insbesondere einzigen, Axiallagers gelagert ist, welches von zumindest einem steuerbaren ersten Linearaktor mit einer zeitabhängig periodischen Kraft beaufschlagbar ist.

Von Vorteil ist dabei, dass ein Axiallager für die erste Welle vorgesehen ist. Somit ist eine axiale Kraft vom Axiallager aufnehmbar. Der erste Linearaktor ist somit derart anordenbar, dass er am Boden einer industriellen Anlage, auf dem das erste Getriebe aufgestellt ist, abgestützt ist. Alternativ ist auch eine andere indirekte Abstützung des ersten Linearaktors am Gehäuse des ersten Getriebes ermöglicht oder ein direktes Abstützen des Linearaktors am Gehäuse des ersten Getriebes. Das erste Getriebe ist ebenfalls mit einem weiteren Axiallager ausgeführt, das die abtreibende Welle drehbar lagert und im Gehäuse des ersten Getriebes aufgenommen ist.

Mittels des Linearaktors ist die abtreibende Welle mit einer Kraft beaufschlagbar, so dass das Getriebe als Prüfling verwendbar ist, wobei die Öldichtheit des ersten Getriebes unter Belastung, also durch Beaufschlagung mit Querkraft, überprüfbar ist. Das erste Getriebe ist mit Öl befüllt, wobei die abtreibende Welle horizontal ausrichtbar ist. Bei bestandenem Test, also nach überstandener Prüfung, wird das erste Getriebe ausgebaut und um 90° verdreht angeordnet, wo es von einem anderen Elektromotor angetrieben wird. Dabei ist auch kein vollständiges Befüllen mit Öl, sondern nur ein teilweises Befüllen notwendig, wobei dann auch kein Ausgleichsbehälter mehr vorhanden ist.

Wichtig ist bei der Erfindung, dass die abtreibende Welle mit einer ersten Welle, also einer außerhalb des ersten Getriebes gelagerten Welle, drehfest verbunden ist. Somit ist es ermöglicht, die Lagerung, insbesondere also den Außenring des Axiallagers, mit einer Kraft zu beaufschlagen, die somit dann über dieses Axiallager der ersten Welle zugeleitet wird. Auf diese Weise wird das erste Getriebe mit einer ähnlichen Kraft belastet wie auch in einer späteren Anwendung, für die das erste Getriebe vorgesehen ist.

Wenn die Prüfung des Getriebes bestanden ist, also wenn das Getriebe die Belastung unbeschadet und öldicht überstanden hat, wird das Getriebe ausgebaut und in der Anwendung eingesetzt. Dabei ist die räumliche Ausrichtung des Getriebes 90° verdreht. Beispielsweise wird das erste Getriebe in einer Mischer-Anwendung, insbesondere in einem Rührwerk, eingesetzt, wobei die abtreibende Welle vertikal gerichtet ist. Hierbei darf kein Öl aus dem Getriebe austreten. Zur Verminderung von Masse des ersten Getriebes wird das erste Getriebe nur teilweise mit Öl befüllt. Der Ölpegel ist dabei nur derart hoch, dass die Lager und die miteinander im Eingriff stehenden Verzahnungsteile zumindest teilweise geschmiert sind, insbesondere also der Eingriffsbereich unterhalb des Ölpegels liegt.

Bei einer vorteilhaften Ausgestaltung ist die erste Welle über eine Kardanwelle insbesondere mittels Kardangelenken, mit einer Generatoreinheit verbunden ist, insbesondere drehfest verbunden,
insbesondere wobei die Generatoreinheit ein Generator ist oder ein über ein zweites Getriebe antreibbarer Generator ist. Von Vorteil ist dabei, dass die vom Elektromotor beim Antreiben des ersten Getriebes eingebrachte Energiemenge größtenteils rückgewinnbar ist. Außerdem ist mit der Generatoreinheit die rückgewonnene Leistung in weiten Grenzen steuerbar.

Bei einer vorteilhaften Ausgestaltung ist die erste Welle an ihrem von dem ersten Getriebe abgewandten Endbereich mit einer Kupplung, insbesondere starren Kupplung, mit einem ersten Kardangelenk verbunden, insbesondere drehfest verbunden ist, welches an seinem von der ersten Welle abgewandten Seite mit einer oder der Kardanwelle verbunden ist, insbesondere drehfest verbunden ist,
wobei die Kardanwelle an ihrem von der ersten Welle abgewandten Seite mit einem zweiten Kardangelenk verbunden ist, insbesondere drehfest verbunden ist, dass an seiner von der Kardanwelle abgewandten Seite mittels einer Kupplung, insbesondere starren Kupplung, mit der eintreibenden Welle der Generatoreinheit, insbesondere des zweiten Getriebes der Generatoreinheit, drehfest verbunden ist. Von Vorteil ist dabei, dass die durch die Kraft bewirkten Querauslenkungen der ersten Welle über das Kardangelenk kompensierbar sind, so dass die Generatoreinheit unverändert antreibbar ist.

Erfindungsgemäß ist das erste Getriebe mit einem Ausgleichsbehälter derart verbunden, dass der Innenraumbereich des ersten Getriebes insbesondere vollständig mit Öl befüllt ist und thermisch bedingte Ausdehnungen des Öls im Innenraumbereich des Ausgleichbehälters aufgenommen werden. Von Vorteil ist dabei, dass das Getriebe zwar mit Öl komplett gefüllt ist, aber bei Temperaturänderung keine Druckänderung gegenüber der Umgebung bewirkbar ist. Somit sind auch Wellenabdichtungen des ersten Getriebes vor Überdruck geschützt.

Erfindungsgemäß weist der Ausgleichsbehälter einen Innenraumbereich auf, welcher aus zwei, durch eine Membran voneinander getrennte Teilbereiche gebildet ist, wobei ein erster der Teilbereiche mit dem Innenraumbereich des ersten Getriebes mit einer Ölleitung verbunden ist und wobei der zweite der Teilbereiche mit der Umgebung verbunden ist,

insbesondere wobei der erste Teilbereich zusammen mit dem Innenraumbereich des ersten Getriebes vollständig mit Öl befüllt sind,
insbesondere wobei der Innenraumbereich des Ausgleichsbehälters, insbesondere die Membran, in Gravitationsrichtung höher als der Innenraumbereich des ersten Getriebes angeordnet ist. Von Vorteil ist dabei, dass die Membran flexibel ausgeführt ist und somit die Ausdehnung des Öls durch eine veränderte Oberfläche ohne wesentlichen Druckaufbau bewirkbar ist. An den veränderten Oberflächen liegt zumindest teilweise die Membran an.

Bei einer vorteilhaften Ausgestaltung ist im Gehäuse des ersten Getriebes ein weiteres Axiallager, insbesondere Drucklager, aufgenommen und die abtreibende Welle des ersten Getriebes ist drehbar gelagert mittels des weiteren Axiallagers,
wobei die Drehachse der abtreibenden Welle horizontal, insbesondere also senkrecht zur Gravitationsrichtung, gerichtet ist. Von Vorteil ist dabei, dass eine über die abtreibende Welle ins Getriebe eingeleitete Kraft kompensierbar ist. Mittels der über das erste Axiallager eingebrachten Kraft ist somit die Fehlerfreiheit der Funktion des ersten Getriebes überprüfbar.

Bei einer vorteilhaften Ausgestaltung ist die abtreibende Welle des ersten Getriebes nicht nur über das weitere Axiallager, sondern auch über zwei weitere, im Gehäuse des ersten Getriebes aufgenommenen Lager drehbar gelagert,
insbesondere wobei jedes der beiden weiteren, im Gehäuse des ersten Getriebes aufgenommenen Lager jeweils als zweireihiges Lager ausgeführt ist. Von Vorteil ist dabei, dass die abtreibende Welle über die beiden weiteren Lager drehbar gelagert ist und über das weitere Axiallager eine hohe Kraftbelastung aufnehmbar ist. Somit ist eine sichere und robuste Funktion gewährleistbar.

Bei einer vorteilhaften Ausgestaltung ist der Antrieb auf einer ebenen Bodenfläche einer industriellen Anlage aufgestellt,
wobei die Drehachse der abtreibenden Welle senkrecht zur Normalen der die Bodenfläche aufnehmenden Ebene ausgerichtet ist. Von Vorteil ist dabei, dass das erste Getriebe zwar für eine Anwendung mit vertikal orientierter abtreibenden Welle vorgesehen ist, insbesondere für ein Rührwerk oder in einem Mischer, aber zur Prüfung die abtreibende Welle horizontal ausgerichtet ist.

Bei einer vorteilhaften Ausgestaltung ist das Axiallager von zumindest einem steuerbaren zweiten Linearaktor mit einer Kraft beaufschlagbar, insbesondere welche senkrecht zu der vom ersten Linearaktor bewirkten Kraft gerichtet ist. Von Vorteil ist dabei, dass als Überlagerung der von den beiden Linearaktoren erzeugten Kräfte eine resultierende Kraft in die erste Welle einleitbar ist, wobei die Richtung der resultierenden Kraft einen nicht verschwindenden Winkel zur horizontalten Richtung und auch zur vertikalen Richtung einschließt.

Bei einer vorteilhaften Ausgestaltung ist das Axiallager von zumindest einem steuerbaren dritten Linearaktor mit einer Kraft beaufschlagbar, insbesondere welche senkrecht zu der vom ersten Linearaktor bewirkten Kraft gerichtet ist und senkrecht zu der vom dritten Linearaktor bewirkten Kraft gerichtet ist. Von Vorteil ist dabei, dass sogar eine axiale Komponente zu der von den ersten beiden Linearaktoren erzeugten radialen Komponente überlagerbar ist. Somit ist eine der realen Belastung in der Anwendung möglichst ähnliche Belastung aufbringbar.

Bei einer vorteilhaften Ausgestaltung ist der erste Linearaktor von einer Steuerung mit einem zeitlich veränderlichen, insbesondere zeitlich periodisch veränderlichen, ersten Ansteuersignal ansteuerbar,
wobei der zweite Linearaktor von einer Steuerung mit einem zeitlich veränderlichen, insbesondere zeitlich periodisch veränderlichen, zweiten Ansteuersignal ansteuerbar ist, insbesondere wobei das erste und das zweite Ansteuersignal die selbe Frequenz aufweisen und einen Phasenversatz von 90° zueinander aufweisen. Von Vorteil ist dabei, dass eine beim Rühren auftretende, radial gerichtete Kraft simulierbar ist. Der Richtung des Kraftvektors ist dabei umlaufend. Vorzugsweise wird als Frequenz die Drehzahl der abtreibenden Welle gewählt. Denn genau bei dieser Frequenz ist eine umlaufende Belastung simulierbar, die beim Rührwerk später in der Anwendung auftritt, wenn Reibungskräfte möglichst klein sind. Um aber auch die Belastung beim Rühren mit nicht vernachlässigbaren Reibungskräften zu simulieren, ist ein Schlupf, also eine Abweichung zwischen der Frequenz und der Drehzahl der abtreibenden Welle des ersten Getriebes auswählbar. Hierbei unterscheiden sich die Frequenz und die Drehzahl der abtreibenden Welle vorzugsweise um maximal 40%. Auf diese Weise ist auch das Kippen des das erste Getriebe antreibenden Elektromotors, insbesondere Drehstrom-Asynchronmotors, ausreichend berücksichtigt.

Wichtige Merkmale bei dem Verfahren zum Betreiben des Prüfstandes sind, dass das Axiallager von zumindest einem steuerbaren zweiten Linearaktor mit einer weiteren Kraft beaufschlagbar ist,
wobei in einem ersten Verfahrensschritt
der erste Linearaktor von einer Steuerung mit einem zeitlich veränderlichen, insbesondere zeitlich periodisch veränderlichen, ersten Ansteuersignal angesteuert wird,
wobei der zweite Linearaktor von der Steuerung mit einem zeitlich veränderlichen, insbesondere zeitlich periodisch veränderlichen, zweiten Ansteuersignal angesteuert wird,
insbesondere wobei das erste und das zweite Ansteuersignal die selbe Frequenz aufweisen und einen Phasenversatz von 90° zueinander aufweisen, insbesondere wobei die Drehzahl der abtreibenden Welle der Frequenz gleicht. Von Vorteil ist dabei, dass die Belastung beim Einsatz des ersten Getriebes in einem Rührwerk simulierbar ist.

Alternativ weisen zwar das erste und das zweite Ansteuersignal die selbe Frequenz auf, aber die Drehzahl der abtreibenden Welle unterscheidet sich von der Frequenz, insbesondere um bis zu 40%. Auf diese Weise ist auch ein reibungsbehaftetes Rühren simulierbar und die Prüfung entsprechend hierzu ausführbar.

Bei einer vorteilhaften Ausgestaltung wird in einem zweiten Verfahrensschritt
das erste Getriebe des Antriebs ausgebaut und danach mit einem anderen Elektromotor verbunden,
wobei die Richtung der Drehachse der abtreibenden Welle im zweiten Verfahrensschritt senkrecht zur Richtung der Drehachse der abtreibenden Welle im ersten Verfahrensschritt ausgerichtet ist,
insbesondere wobei im zweiten Verfahrensschritt die abtreibende Welle des ersten Getriebes 90° gedreht, insbesondere in die vertikale Richtung, insbesondere also parallel zur Gravitationsrichtung, ausgerichtet wird. Von Vorteil ist dabei, dass die Prüfung des ersten Getriebes um 90° gedreht erfolgt und somit das für eine Mischer- oder Rührwerk-Anwendung vorgesehene erste Getriebe prüfbar ist mit einer einfach und schnell aufzubauenden Anordnung.

Bei einer vorteilhaften Ausgestaltung ist im ersten Verfahrensschritt der Innenraumbereich des ersten Getriebes vollständig mit Öl befüllt
und im zweiten Verfahrensschritt der Innenraumbereich des ersten Getriebes nur teilweise, insbesondere also nicht vollständig, mit Öl befüllt, insbesondere wobei das weitere Axiallager und die beiden weiteren, im Gehäuse des ersten Getriebes aufgenommenen Lager zumindest teilweise unterhalb des Ölpegels angeordnet sind. Von Vorteil ist dabei, dass bei der Prüfung, die um 90° verdreht ausgeführt wird, trotzdem die mit Öl in der Anwendung zu benetzenden Bereiche mit Öl benetzt sind. Allerdings ist dafür das erste Getriebe bei der Prüfung mit Öl vollständig gefüllt und ein Ausgleichsbehälter angeschlossen, der in der Anwendung nicht notwendig ist.

Weitere Vorteile ergeben sich aus den Unteransprüchen.

Die Erfindung wird nun anhand von schematischen Abbildungen näher erläutert:

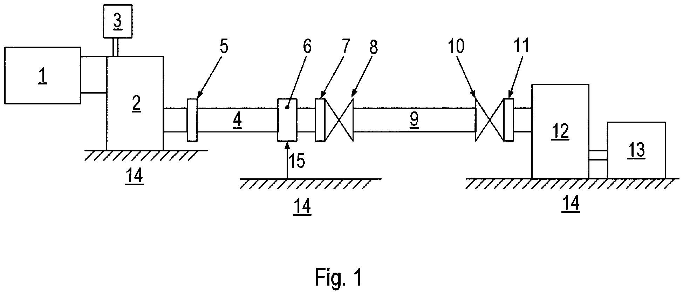

In der Figur 1 ist ein erfindungsgemäßer Prüfstand zum Einleiten von Querkraft in die abtreibende Welle eines Getriebes schematisch skizziert.

Dabei treibt ein Elektromotor 1 des Prüfstands einen Prüfling 2, insbesondere Getriebe, an. Hierzu ist die Rotorwelle des Elektromotors 1 mit der eintreibenden Welle des als Getriebe ausgeführten Prüflings 2 verbunden.

Das Gehäuse des Prüflings 2 sowie das Gehäuse des Elektromotors 1 ist mit dem Boden 14 der industriellen Anlage verbunden, in welcher der Prüfstand aufgestellt ist.

Im vom Gehäuse des Prüflings 2 umgebenen Innenraumbereich sind Verzahnungsteile mit drehbar gelagerten Wellen angeordnet und von Öl, insbesondere Schmieröl, umgeben.

Da das als Prüfling 2 verwendete Getriebe für Anwendungen vorgesehen ist, bei denen die abtreibende Welle vertikal gerichtet ist, insbesondere also beispielsweise für als Mischergetriebe vorgesehen ist, und bei der Anwendung eine zumindest teilweise Befüllung des Innenraumbereichs mit Öl vorgesehen ist, wird das Getriebe für die Prüfung auf dem Prüfstand vollständig mit Öl gefüllt. Somit ist gesichert, dass alle in der Anwendung mit Öl zu benetzenden Bereiche auch bei der Prüfung auf dem Prüfstand mit Öl benetzt sind. Mit dem Getriebe ist ein Ausgleichsbehälter 3 verbunden, so dass bei thermischer Ausdehnung des Öls dieses in ein vorzugsweise mit einer Membran begrenztes Volumen **ein** oder ausströmen kann. Hierzu ist der Innenraumbereich des Getriebes mit dem Innenraumbereich des Ausgleichbehälters **3 verbunden** und der nicht von Öl befüllteTeil des Innenraumbereichs des Ausgleichsbehälters 3 mit der Umgebung verbunden. Der Ausgleichsbehälter 3 ist zumindest teilweise höher angeordnet als das Getriebe.

Die abtreibende Welle des Getriebes ist mittels einer ersten Kupplung 5, insbesondere eine starre Wellenkupplung, mit einer ersten Welle 4 verbunden, die über zumindest ein Axiallager 6 drehbar gelagert angeordnet ist.

Das Axiallager 6 weist einen Innenring, Wälzkörper und einen Außenring auf. Der Innenring ist auf die erste Welle 4 aufgesteckt. Vorzugsweise ist der Innenring mit der ersten Welle 4 kraftschlüssig verbunden, insbesondere mittels eines Passsitzes.

Der Außenring ist von einem ersten Linearaktor 15, insbesondere von einem hydraulischen Aktor, quer zur Drehachse der ersten Welle 4, also auch quer zur Drehachse der abtreibenden Welle des Getriebes bewegbar. Der erste Linearaktor 15 ist am Boden 14 abgestützt.

Somit ist mittels des ersten Linearaktors 15 die erste Welle 4 und daher auch die abtreibende Welle des Getriebes mit einer Querkraft beaufschlagbar, welche senkrecht gerichtet ist zur Richtung der Drehachse der ersten Welle 4 beziehungsweise der abtreibenden Welle des Getriebes.

Durch moduliertes Betreiben des Linearaktors 15 ist eine entsprechend zeitabhängig modulierte Querkraft erzeugbar. Auf diese Weise ist vorzugsweise eine periodische Belastung bei der Drehbewegung der abtreibenden Welle einleitbar.

An dem vom Getriebe abgewandten Endbereich der ersten Welle 4 ist eine zweite Kupplung 7, insbesondere eine starre Wellenkupplung, angeordnet, an welche ein Kardangelenk 8 angebunden ist, so dass das von der abtreibenden Welle des Getriebes 2 gelieferte Drehmoment einer Kardanwelle 9 zugeführt wird, welche über ein auf ihrer vom Getriebe abgewandten Seite angeordnetes weiteres Kardangelenk 10 mit einer weiteren Kupplung 11, insbesondere mit einer weiteren starre Wellenkupplung, mit einem mit einem Getriebe 12 verbundenen Generator 13 verbunden ist.

Somit sind auch Querauslenkungen der ersten Welle 4 mittels der Kardangelenke (8, 10) kompensierbar.

Bei weiteren erfindungsgemäßen Ausführungsbeispielen ist ein zweiter Linearaktor 15 am Boden abgestützt angeordnet, welcher ebenfalls auf den Außenring des Axiallagers drückt, wobei die Richtung der aufgebrachten Querkraft vorzugsweise senkrecht oder zumindest einen Winkel von mehr als 50° zur Wirkrichtung des ersten Linearaktors 15 erzeugt.

Somit sind bei geeigneter Modulation, insbesondere bei 90° phasenverschobener periodischer Modulation, der beiden Linearaktoren 14 auch kreisförmig umlaufende Querkräfte erzeugbar.

Vorzugsweise wird also der erste Linearaktor mit einem sinusförmig zeitabhängigen Ansteuersignal beaufschlagt und der zweite Linearaktor mit einem cosinusförmig zeitabhängigen Ansteuersignal.

Solch eine periodisch umlaufende Belastung ist zur Simulation einer Belastung beim Rührbetrieb eines Mischers geeignet.

Bei weiteren erfindungsgemäßen Ausführungsbeispielen ist alternativ oder zusätzlich ein dritter Linearaktor vorgesehen, welcher den Außenring in axialer Richtung, also parallel zur Richtung der Drehachse der abtreibenden Welle, belastet. Somit ist auch die Simulation einer Axialkraft, insbesondere modulierten Axialkraft, ausführbar.

### Bezugszeichenliste

1 Elektromotor
2 Prüfling, insbesondere Getriebe
3 Ausgleichsbehälter, insbesondere für Öl
4 erste Welle
5 erste Kupplung
6 Axiallager
7 zweite Kupplung
8 Kardangelenk
9 zweite Welle, insbesondere Kardanwelle,
10 Kardangelenk
11 dritte Kupplung
12 Getriebe
13 Generator
14 Boden
15 Linearaktor, insbesondere hydraulischer Aktor

## Patentansprüche

1. **Prüfstand zum Prüfen eines ersten Getriebes, aufweisend einen**
Antrieb, aufweisend einen Elektromotor (1) und **das erste** Getriebe (2), das von dem Elektromotor (1) antreibbar ist,
wobei eine abtreibende Welle des ersten Getriebes (2) mittels einer Kupplung (5), insbesondere starren Wellenkupplung, mit einer ersten Welle (4) drehfest verbunden ist,
wobei die erste Welle (4) mittels eines, insbesondere einzigen, Axiallagers (6) gelagert ist, welches von zumindest einem steuerbaren ersten Linearaktor (15) mit einer **zeitabhängig periodischen** Kraft beaufschlagbar **ist,**
**dadurch gekennzeichnet, dass das erste Getriebe** (2) **mit einem Ausgleichsbehälter** (3) **derart verbunden ist, dass der Innenraumbereich des ersten Getriebes** (2)**, insbesondere vollständig, mit Öl befüllt ist und thermisch bedingte Ausdehnungen des Öls im Innenraumbereich des** Ausgleichsbehälters (3) **aufgenommen werden,**
**wobei der Ausgleichsbehälter** (3) **einen Innenraumbereich aufweist, welcher aus zwei, durch eine Membran voneinander getrennten Teilbereichen gebildet ist,**
**wobei ein erster der Teilbereiche mit dem Innenraumbereich des ersten Getriebes** (2) **mit einer Ölleitung verbunden ist und wobei der zweite der Teilbereiche mit der Umgebung verbunden ist.**

2. Prüfstand nach Anspruch 1,
**dadurch gekennzeichnet, dass**
die erste Welle über eine Kardanwelle insbesondere mittels Kardangelenken, mit einer Generatoreinheit (13) verbunden ist, insbesondere drehfest verbunden ist,
insbesondere wobei die Generatoreinheit ein Generator ist oder ein über ein zweites Getriebe antreibbarer Generator ist.

3. Prüfstand nach einem der vorangegangenen Ansprüche,
**dadurch gekennzeichnet, dass**
die erste Welle an ihrem von dem ersten Getriebe abgewandten Endbereich mit einer Kupplung (7) insbesondere starren Kupplung, mit einem ersten Kardangelenk (8) verbunden ist, insbesondere drehfest verbunden ist, welches an seinem von der ersten Welle abgewandten Seite mit einer Kardanwelle (9) verbunden ist, insbesondere drehfest verbunden ist,
wobei die Kardanwelle an ihrem von der ersten Welle abgewandten Seite mit einem zweiten Kardangelenk (10) verbunden ist, insbesondere drehfest verbunden ist, dass an seiner von der Kardanwelle abgewandten Seite mittels einer Kupplung (11), insbesondere starren Kupplung, mit der eintreibenden Welle der Generatoreinheit, insbesondere des zweiten Getriebes (12) der Generatoreinheit, drehfest verbunden ist.

4. Prüfstand nach einem der vorangegangenen Ansprüche,
**dadurch gekennzeichnet, dass**
der Innenraumbereich des Ausgleichsbehälters, insbesondere die Membran, in Gravitationsrichtung höher als der Innenraumbereich des ersten Getriebes angeordnet ist.

5. Prüfstand nach einem der vorangegangenen Ansprüche,
**dadurch gekennzeichnet, dass**
im Gehäuse des ersten Getriebes ein weiteres Axiallager, insbesondere Drucklager, aufgenommen ist und die abtreibende Welle des ersten Getriebes drehbar gelagert ist mittels des weiteren Axiallagers,
wobei die Drehachse der abtreibenden Welle horizontal, insbesondere also senkrecht zur Gravitationsrichtung, gerichtet ist.

6. Prüfstand nach Anspruch 5,
**dadurch gekennzeichnet, dass**
die abtreibende Welle des ersten Getriebes nicht nur über das weitere Axiallager, sondern auch über zwei weitere, im Gehäuse des ersten Getriebes aufgenommenen Lager drehbar gelagert ist,
insbesondere wobei jedes der beiden weiteren, im Gehäuse des ersten Getriebes aufgenommenen Lager jeweils als zweireihiges Lager ausgeführt ist.

7. Prüfstand nach einem der vorangegangenen Ansprüche,
**dadurch gekennzeichnet, dass**
der Antrieb auf einer ebenen Bodenfläche (14) einer industriellen Anlage aufgestellt ist,
wobei die Drehachse der abtreibenden Welle senkrecht zur Normalen der die Bodenfläche aufnehmenden Ebene ausgerichtet ist.

8. Prüfstand nach einem der vorangegangenen Ansprüche,
**dadurch gekennzeichnet, dass**
das Axiallager von zumindest einem steuerbaren zweiten Linearaktor mit einer Kraft beaufschlagbar ist, insbesondere welche senkrecht zu der vom ersten Linearaktor bewirkten Kraft gerichtet ist.

9. Prüfstand nach Anspruch 8,
**dadurch gekennzeichnet, dass**
das Axiallager von zumindest einem steuerbaren weiteren Linearaktor, insbesondere dritten Linearaktor, mit einer axial gerichteten Kraft beaufschlagbar ist,
und/oder dass
das Axiallager von zumindest einem steuerbaren dritten Linearaktor mit einer Kraft beaufschlagbar ist, insbesondere welche senkrecht zu der vom ersten Linearaktor bewirkten Kraft gerichtet ist und senkrecht zu der vom zweiten Linearaktor bewirkten Kraft gerichtet ist, insbesondere also in axialer Richtung gerichtet ist.

10. Prüfstand nach Anspruch 8 oder 9,
**dadurch gekennzeichnet, dass**
der erste Linearaktor von einer Steuerung mit einem zeitlich veränderlichen, insbesondere zeitlich periodisch veränderlichen, ersten Ansteuersignal ansteuerbar ist,
wobei der zweite Linearaktor von einer Steuerung mit einem zeitlich veränderlichen, insbesondere zeitlich periodisch veränderlichen, zweiten Ansteuersignal ansteuerbar ist,
insbesondere wobei das erste und das zweite Ansteuersignal die selbe Frequenz aufweisen und einen Phasenversatz von 90° zueinander aufweisen.

11. Verfahren zum Betreiben **eines** Prüfstands nach einem der vorangegangenen Ansprüche,
wobei der Prüfstand einen Antrieb aufweist, und wobei das Axiallager von zumindest einem steuerbaren zweiten Linearaktor mit einer weiteren Kraft beaufschlagbar ist,
und wobei in einem ersten Verfahrensschritt der erste Linearaktor von einer Steuerung mit einem zeitlich periodisch veränderlichen ersten Ansteuersignal angesteuert wird,
wobei der zweite Linearaktor von der Steuerung mit einem zeitlich veränderlichen, insbesondere zeitlich periodisch veränderlichen, zweiten Ansteuersignal angesteuert wird.

12. Verfahren nach Anspruch 11,
**dadurch gekennzeichnet, dass**
das erste und das zweite Ansteuersignal die selbe Frequenz aufweisen,
insbesondere
- wobei das erste Ansteuersignal zum zweiten Ansteuersignal einen Phasenversatz, insbesondere von 90°, zueinander aufweist
- und/oder wobei die Drehzahl der abtreibenden Welle der Frequenz gleich ist.

13. Verfahren nach Anspruch 11,
**dadurch gekennzeichnet, dass**
das erste und das zweite Ansteuersignal die selbe Frequenz aufweisen,
wobei die Drehzahl der abtreibenden Welle unterschiedlich ist zur Frequenz, insbesondere wobei die Drehzahl der abtreibenden Welle sich um weniger als 40% unterscheidet von der Frequenz gleich ist,
insbesondere
- wobei das erste Ansteuersignal zum zweiten Ansteuersignal einen Phasenversatz, insbesondere von 90°, zueinander aufweist.

14. Verfahren nach Anspruch 11,
**dadurch gekennzeichnet, dass**
in einem zweiten Verfahrensschritt
das erste Getriebe des Antriebs ausgebaut und danach mit einem anderen Elektromotor verbunden wird,
wobei die Richtung der Drehachse der abtreibenden Welle im zweiten Verfahrensschritt senkrecht zur Richtung der Drehachse der abtreibenden Welle im ersten Verfahrensschritt ausgerichtet ist,
insbesondere wobei im zweiten Verfahrensschritt die abtreibende Welle des ersten Getriebes 90° gedreht, insbesondere in die vertikale Richtung, insbesondere also parallel zur Gravitationsrichtung, ausgerichtet wird.

15. Verfahren nach Anspruch 14,
**dadurch gekennzeichnet, dass**
im ersten Verfahrensschritt der Innenraumbereich des ersten Getriebes vollständig mit Öl befüllt ist
und im zweiten Verfahrensschritt der Innenraumbereich des ersten Getriebes nur teilweise, insbesondere also nicht vollständig, mit Öl befüllt ist, insbesondere wobei das weitere Axiallager und die beiden weiteren, im Gehäuse des ersten Getriebes aufgenommenen Lager zumindest teilweise unterhalb des Ölpegels angeordnet sind.

## Claims

1. A test stand for testing a first gear unit, having a drive, having an electric motor (1) and the first gear unit (2) which can be driven by the electric motor (1),
wherein an output shaft of the first gear unit (2) is connected non-rotatably to a first shaft (4) by means of a coupling (5), in particular rigid shaft coupling,
wherein
the first shaft (4) is borne by means of an, in particular single, axial bearing (6) which can be subjected to a time-dependent periodic force by at least one controllable first linear actuator (15),
**characterised in that** the first gear unit (2) is connected to an equalising reservoir (3) such that the interior region of the first gear unit (2) is filled in particular completely with oil and thermally caused expansions of the oil are accommodated in the interior region of the equalising reservoir (3),
with the equalising reservoir (3) having an interior region which is formed of two partial regions separated from each other by a membrane,
with a first one of the partial regions being connected to the interior region of the first gear unit (2) with an oil line, and with the second one of the partial regions being connected to the surroundings.

2. A test stand according to claim 1,
**characterised in that**
the first shaft is connected, in particular is connected non-rotatably, to a generator unit (13) by way of a cardan shaft, in particular by means of cardan joints,
in particular with the generator unit being a generator, or a generator which can be driven by way of a second gear unit.

3. A test stand according to one of the preceding claims,
**characterised in that**
the first shaft on its end region which is remote from the first gear unit is connected, in particular is connected non-rotatably, with a coupling (7), in particular rigid coupling, to a first cardan joint (8) which is connected, in particular is connected non-rotatably, on its side which is remote from the first shaft to a cardan shaft (9),
with the cardan shaft on its side which is remote from the first shaft being connected, in particular being connected non-rotatably, to a second cardan joint (10) which is connected non-rotatably on its side which is remote from the cardan shaft by means of a coupling (11), in particular rigid coupling, to the input shaft of the generator unit, in particular of the second gear unit (12) of the generator unit.

4. A test stand according to one of the preceding claims,
**characterised in that**
the interior region of the equalising reservoir, in particular the membrane, is arranged higher in the direction of gravity than the interior region of the first gear unit.

5. A test stand according to one of the preceding claims,
**characterised in that**
in the housing of the first gear unit there is received a further axial bearing, in particular thrust bearing, and the output shaft of the first gear unit is rotatably mounted by means of the further axial bearing,
with the axis of rotation of the output shaft being directed horizontally, in particular therefore perpendicularly to the direction of gravity.

6. A test stand according to claim 5,
**characterised in that**
the output shaft of the first gear unit is rotatably mounted not only by way of the further axial bearing, but also by way of two further bearings received in the housing of the first gear unit,
in particular with each of the two further bearings received in the housing of the first gear unit being embodied in each case as a double-row bearing.

7. A test stand according to one of the preceding claims,
**characterised in that**
the drive is set up on a flat floor surface (14) of an industrial installation,
with the axis of rotation of the output shaft being oriented perpendicularly to the normal to the plane which accommodates the floor surface.

8. A test stand according to one of the preceding claims,
**characterised in that**
the axial bearing can be subjected to a force by at least one controllable second linear actuator, in particular a force which is directed perpendicularly to the force produced by the first linear actuator.

9. A test stand according to claim 8,
**characterised in that**
the axial bearing can be subjected to an axially directed force by at least one controllable further linear actuator, in particular third linear actuator,
and/or **in that**
the axial bearing can be subjected to a force by at least one controllable third linear actuator, in particular a force which is directed perpendicularly to the force produced by the first linear actuator and is directed perpendicularly to the force produced by the second linear actuator, in particular therefore is directed in the axial direction.

10. A test stand according to claim 8 or 9,
**characterised in that**
the first linear actuator can be controlled by a control means with a time-variable, in particular periodically time-variable, first control signal,
with the second linear actuator being able to be controlled by a control means with a time-variable, in particular periodically time-variable, second control signal,
in particular with the first and the second control signal having the same frequency and having a phase offset of 90° relative to each other.

11. A method for operating a test stand according to one of the preceding claims, wherein the test stand has a drive, and wherein
the axial bearing can be subjected to a further force by at least one controllable second linear actuator,
and wherein
in a first method step
the first linear actuator is controlled by a control means with a periodically time-variable first control signal,
with the second linear actuator being controlled by the control means with a time-variable, in particular periodically time-variable, second control signal.

12. A method according to claim 11,
**characterised in that**
the first and the second control signal have the same frequency,
in particular
- with the first control signal having a phase offset, in particular of 90°, relative to the second control signal, relative to each other
- and/or with the rotational speed of the output shaft being equal to the frequency.

13. A method according to claim 11,
**characterised in that**
the first and the second control signal have the same frequency,
with the rotational speed of the output shaft being different from the frequency,
in particular with the rotational speed of the output shaft differing by less than 40% from the frequency being equal,
in particular
- with the first control signal having a phase offset, in particular of 90°, relative to the second control signal, relative to each other.

14. A method according to claim 11,
**characterised in that**
in a second method step
the first gear unit of the drive is removed and thereafter is connected to another electric motor,
with the direction of the axis of rotation of the output shaft in the second method step being oriented perpendicularly to the direction of the axis of rotation of the output shaft in the first method step,
in particular with in the second method step the output shaft of the first gear unit being turned 90°, in particular being oriented in the vertical direction, in particular therefore parallel to the direction of gravity.

15. A method according to claim 14,
**characterised in that**
in the first method step the interior region of the first gear unit is completely filled with oil
and in the second method step the interior region of the first gear unit is only partially, in particular therefore not completely, filled with oil, in particular with the further axial bearing and the two further bearings which are received in the housing of the first gear unit being arranged at least partially beneath the oil level.

## Revendications

1. Banc d'essai permettant de tester une première transmission, comprenant un entraînement, comprenant un moteur électrique (1) et la première transmission (2) qui peut être entraînée par le moteur électrique (1),
un arbre de sortie de la première transmission (2) étant relié de manière solidaire en rotation à un premier arbre (4) au moyen d'un accouplement (5), en particulier d'un accouplement d'arbre rigide,
le premier arbre (4) étant monté au moyen d'un palier axial (6), en particulier unique, qui peut être soumis à une force périodique en fonction du temps grâce à au moins un premier actionneur linéaire (15) pouvant être commandé,
**caractérisé en ce que** la première transmission (2) est reliée à un réservoir d'expansion (3) de telle manière que la région intérieure de la première transmission (2) est remplie d'huile, en particulier complètement, et que des dilatations d'origine thermique de l'huile sont prises en charge dans la région intérieure du réservoir d'expansion (3),
le réservoir d'expansion (3) présentant une région intérieure formée de deux sous-régions séparées l'une de l'autre par une membrane,
une première des sous-régions étant reliée à la région intérieure de la première transmission (2) par une conduite d'huile et la seconde des sous-régions étant reliée à l'environnement.

2. Banc de test selon la revendication 1,
**caractérisé en ce que**
le premier arbre est relié, en particulier est relié de manière solidaire en rotation, à une unité de générateur (13) par un arbre à cardan, en particulier au moyen de joints de cardan,
l'unité de générateur étant en particulier un générateur ou étant un générateur pouvant être entraîné par une deuxième transmission.

3. Banc de test selon l'une quelconque des revendications précédentes,
**caractérisé en ce que**
le premier arbre est relié, en particulier est relié de manière solidaire en rotation, à un accouplement (7), en particulier à un accouplement rigide, au niveau de sa région d'extrémité opposée à la première transmission grâce à un premier joint de cardan (8) qui est relié, au niveau de son côté opposé au premier arbre, à un arbre à cardan (9), l'arbre à cardan étant relié, en particulier étant relié de manière solidaire en rotation, au niveau de son côté opposé au premier arbre, à un deuxième joint de cardan (10) qui est relié de manière solidaire en rotation, au niveau de son côté opposé à l'arbre à cardan, à l'arbre d'entraînement de l'unité de générateur, en particulier de la deuxième transmission (12) de l'unité de générateur, au moyen d'un accouplement (11), en particulier d'un accouplement rigide.

4. Banc de test selon l'une quelconque des revendications précédentes,
**caractérisé en ce que**
la région intérieure du réservoir d'expansion, en particulier la membrane, est agencée plus haut que la région intérieure de la première transmission dans le sens de la gravité.

5. Banc de test selon l'une quelconque des revendications précédentes,
**caractérisé en ce que**
un palier axial supplémentaire, en particulier un palier de butée, est logé dans le carter de la première transmission et l'arbre de sortie de la première transmission est monté rotatif au moyen du palier axial supplémentaire,
l'axe de rotation de l'arbre de sortie étant orienté horizontalement, en particulier perpendiculairement au sens de la gravité.

6. Banc de test selon la revendication 5,
**caractérisé en ce que**
l'arbre de sortie de la première transmission est monté rotatif non seulement par l'intermédiaire du palier axial supplémentaire, mais également par l'intermédiaire de deux paliers supplémentaires logés dans le carter de la première transmission, chacun des deux paliers supplémentaires logés dans le carter de la première transmission étant en particulier réalisé respectivement sous la forme d'un palier à deux rangées.

7. Banc de test selon l'une quelconque des revendications précédentes,
**caractérisé en ce que**
l'entraînement est installé sur une surface de sol plane (14) d'une installation industrielle,
l'axe de rotation de l'arbre de sortie étant orienté perpendiculairement à la normale du plan contenant la surface de sol.

8. Banc de test selon l'une quelconque des revendications précédentes,
**caractérisé en ce que**
le palier axial peut être soumis, grâce à au moins un deuxième actionneur linéaire pouvant être commandé, à une force orientée en particulier perpendiculairement à la force exercée par le premier actionneur linéaire.

9. Banc de test selon la revendication 8,
**caractérisé en ce que**
le palier axial peut être soumis, grâce à au moins un actionneur linéaire supplémentaire pouvant être commandé, en particulier le troisième actionneur linéaire, à une force orientée de manière axiale,
et/ou **en ce que**
le palier axial d'au moins un troisième actionneur linéaire pouvant être commandé peut être soumis à une force qui est en particulier orientée perpendiculairement à la force exercée par le premier actionneur linéaire, et qui est orientée perpendiculairement à la force exercée par le deuxième actionneur linéaire, en particulier qui est orientée dans la direction axiale.

10. Banc de test selon la revendication 8 ou 9,
**caractérisé en ce que**
le premier actionneur linéaire peut être commandé par une commande avec un premier signal de commande variable dans le temps, en particulier variable périodiquement dans le temps,
le deuxième actionneur linéaire pouvant être commandé par une commande avec un deuxième signal de commande variable dans le temps, en particulier variable périodiquement dans le temps,
les premier et second signaux de commande présentant en particulier la même fréquence et un déphasage de 90° l'un par rapport à l'autre.

11. Procédé de fonctionnement d'un banc de test selon l'une quelconque des revendications précédentes,
le banc d'essai présentant un entraînement, et le palier axial pouvant être soumis à une force supplémentaire grâce à au moins un deuxième actionneur linéaire pouvant être commandé, et, dans une première étape de procédé, le premier actionneur linéaire étant commandé par une commande avec un premier signal de commande variant périodiquement dans le temps,
le deuxième actionneur linéaire étant commandé par la commande avec un deuxième signal de commande variable dans le temps, en particulier variable périodiquement dans le temps.

12. Procédé selon la revendication 11,
**caractérisé en ce que**
les premier et second signaux de commande présentent la même fréquence,
en particulier
- le premier signal de commande présentant un déphasage, en particulier de 90°, par rapport au deuxième signal de commande
- et/ou la vitesse de rotation de l'arbre de sortie étant égale à ladite fréquence.

13. Procédé selon la revendication 11,
**caractérisé en ce que**
les premier et second signaux de commande présentent la même fréquence, la vitesse de rotation de l'arbre de sortie étant différente de la fréquence, la vitesse de rotation de l'arbre de sortie ne se différenciant en particulier de la fréquence que de moins de 40%,
en particulier
- - le premier signal de commande présentant un déphasage, en particulier de 90°, par rapport au deuxième signal de commande.

14. Procédé selon la revendication 11,
**caractérisé en ce que**
dans une deuxième étape de procédé
la première transmission de l'entraînement est désinstallée, puis connectée à un autre moteur électrique,
la direction de l'axe de rotation de l'arbre de sortie dans la deuxième étape de procédé étant orientée perpendiculairement à la direction de l'axe de rotation de l'arbre de sortie dans la première étape de procédé,
dans la deuxième étape de procédé, l'arbre de sortie de la première transmission étant en particulier tourné à 90°, en particulier dans la direction verticale, en particulier parallèlement au sens de la gravité.

15. Procédé selon la revendication 14,
**caractérisé en ce que**
dans la première étape de procédé, la région intérieure de la première transmission est complètement remplie d'huile
et dans la deuxième étape de procédé, la région intérieure de la première transmission n'est que partiellement, et donc en particulier non complètement, remplie d'huile, le palier axial supplémentaire et les deux paliers supplémentaires logés dans le carter de la première transmission étant en particulier au moins partiellement agencés en dessous du niveau d'huile.
